# EUROPÄISCHE PATENTSCHRIFT

(11) **EP 1 298 040 B1**
(45) Veröffentlichungstag und Bekanntmachung des Hinweises auf die Patenterteilung: **14.06.2006**
(21) Anmeldenummer: 02021056.3
(22) Anmeldetag: 20.09.2002
(51) Int. Cl.: B62D 51/00, B62D 51/04, B66F 9/06, H02K 5/06, H02K 7/116, H02K 11/04

(54) **Motorgehäuse für Flurförderzeug**
Motor housing for industrial truck
Boîtier de moteur pour chariot industriel

(30) Priorität: 01.10.2001 DE 10148490
(43) Veröffentlichungstag der Anmeldung: 02.04.2003
(73) Patentinhaber: STILL S.A.R.L., 77100 Meaux (FR)
(72) Erfinder: Fortin, Dominique, 60160 Montataire (FR); Bimont, Cyril, 60940 St Vaast-Angicourt (FR); Alegre, Jean-Pierre, 60150 Thourotte (FR); Garcia, David, 60500 Chantilly (FR)
(74) Vertreter: Lang, Michael

(56) Entgegenhaltungen:
- EP-A- 0 999 081
- DE-U- 8 906 700
- US-A- 6 011 335
- PATENT ABSTRACTS OF JAPAN vol. 2002, no. 05, 3. Mai 2002 (2002-05-03) & JP 2002 027700 A (HITACHI KOKI CO LTD), 25. Januar 2002 (2002-01-25)

## Beschreibung

Die Erfindung betrifft eine Antriebseinheit für ein Flurförderzeug mit einem elektrischen Antriebsmotor, der über eine Getriebeeinheit mit einem lenkbaren Antriebsrad verbunden ist, wobei der Antriebsmotor ein durch Gießen hergestelltes Motorgehäuse aufweist und das Motorgehäuse des Antriebsmotors derart gegossen ist, dass Befestigungsteile und Anbauteile in das Motorgehäuse integriert sind.

Flurförderzeuge sind in der Regel mit einem elektrischen Antriebsmotor ausgerüstet, der mittels einer Getriebeeinheit den Antrieb eines Antriebsrades gewährleistet. Zur Versorgung des Antriebsmotors mit elektrischer Energie ist in der Regel eine Leistungselektronikeinheit vorgesehen.

Im Bereich des Antriebsmotors befindet sich üblicherweise zudem eine Bremseinheit, um das Antriebsrad bei Bedarf entsprechend abbremsen zu können. Bei deichselgelenkten Flurförderzeugen ist darüber hinaus eine der Lenkung dienende Deichsel mit den zugehörigen Bauteilen, wie beispielsweise einem Gaszylinder, vorhanden. Die genannten Bauteile werden bei herkömmlichen Antriebseinheiten mittels verschiedener Trägerbauteile an einem Rahmenbauteil des Flurförderzeugs befestigt oder auch angeschweißt. Diese Art der Montage ist allerdings kostenintensiv und aufwändig, da jedes Einzelteil separat befestigt werden muss und dazu eine große Anzahl von Trägerbauteilen benötigt wird.

Aus der EP 0 999 081 ist eine Antriebseinheit für ein Flurförderzeug mit einem elektrischen Antriebsmotor, der über eine Getriebeeinheit mit einem lenkbaren Antriebsrad verbunden ist, wobei der Antriebsmotor ein durch Gießen hergestelltes Motorgehäuse aufweist, in das Befestigungsteile integriert sind.

Üblicherweise wird bei derartigen Antriebseinheiten der Lenkausschlag dadurch begrenzt, dass die Deichsel des Fahrzeugs an einen fahrzeugseitigen Anschlag stößt. Aufgrund der Schwenkbarkeit der Deichsel um eine horizontale Achse muss dieser Anschlag eine erhebliche vertikale Ausdehnung besitzen und ist darum aufwändig zu fertigen und zu montieren. Zudem reiben beim Verschwenken der Deichsel um die horizontale Achse Deichsel und fahrzeugseitiger Anschlag aneinander, was zu erhöhtem Verschleiß beider Komponenten führt.

Der Erfindung liegt daher die Aufgabe zugrunde, eine Antriebseinheit zur Verfügung zu stellen, die es ermöglicht, den Lenkausschlag auf einfache Weise zu begrenzen.

Diese Aufgabe wird erfindungsgemäß dadurch gelöst, dass an dem Motorgehäuse mindestens ein Lenkungsanschlag angeordnet ist. Ein Drehen des Antriebsmotors über einen bestimmten Winkel hinaus kann damit vermieden werden. Der Lenkwinkel ist somit auf einen bestimmten, gewünschten Wert begrenzt. Durch das Angießen des Anschlags an das Motorgehäuse wird eine einfache Herstellung ermöglicht.

Es ist besonders vorteilhaft, wenn das Motorgehäuse aus Guss-Eisen oder Stahlguss gebildet ist. Aufgrund ihrer flexiblen Formbarkeit während des Gießens eignen sich Guss-Eisen und Stahlguss besonders gut für die Herstellung von Motorgehäusen. Sie erlauben komplizierte Formgebungen und sind aufgrund ihrer hohen Festigkeiten stabil und widerstandsfähig.

Ebenso ist es zweckmäßig, wenn das Motorgehäuse aus Aluminium gebildet ist. Auch Aluminium ist bei komplizierten Formen ein geeignetes Material und hat zudem den Vorteil, dass das Motorgehäuse dadurch sehr leicht wird.

Zweckmäßigerweise ist an dem Motorgehäuse ein Befestigungsteil für eine Leistungselektronikeinheit angeordnet. Die Leistungselektronikeinheit, die den Antriebsmotor über Kabel mit elektrischer Energie versorgt, kann somit direkt im Bereich des Antriebsmotors befestigt werden. Diese Anordnung ist auch für die Kabel vorteilhaft, da durch die dann mögliche direkte Verbindung weniger Beschädigungen vorkommen.

Um ein Abbremsen des Antriebsrades zu ermöglichen, ist es zweckdienlich, wenn an dem Motorgehäuse eine Bremseinheit befestigbar ist.

Da bei einer Drehung des Antriebsmotors mittels einer Deichsel die Lenkbewegung des Antriebsrads erzeugt wird, ist es vorteilhaft, wenn an dem Motorgehäuse ein Befestigungselement für eine Deichsel angeordnet ist.

Aus dem oben genannten Grund ist es ebenso zweckmäßig, wenn an dem Motorgehäuse ein Befestigungsteil für einen Gaszylinder einer Deichsel angeordnet ist. Der Gaszylinder wird beim Drehen der Deichsel um eine horizontale Achse ein- und ausgefahren und erzeugt eine auf die Deichsel wirkende Rückstellkraft.

Vorteilhafterweise ist an dem Motorgehäuse ein Trägerelement für einen Kontaktschalter zur Ermittlung der Stellung der Deichsel angeordnet. Durch Anbringen des Kontaktschalters an dem Trägerelement kann auf einfache Weise die Deichselstellung abgegriffen werden.

Weitere Vorteile und Einzelheiten der Erfindung werden im Folgenden anhand von in den Zeichnungen dargestellten Ausführungsbeispielen näher erläutert. Hierbei zeigen:
- Figur 1: eine erfindungsgemäße Antriebseinheit im Schnitt,
- Figur 2: eine erfindungsgemäße Antriebseinheit in der Draufsicht.

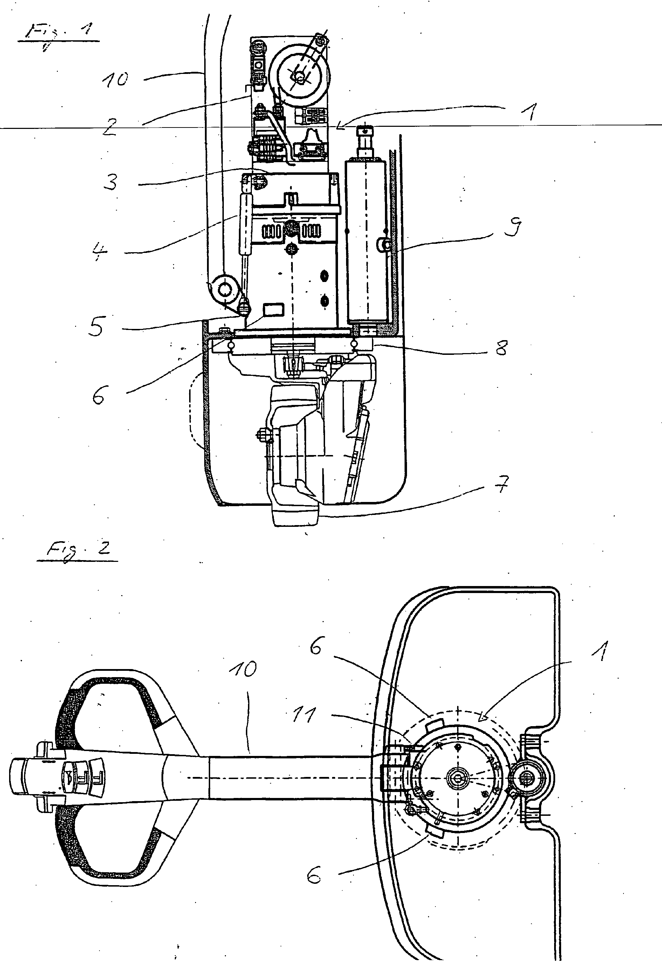

Die Figuren 1 und 2 zeigen als Ausführungsbeispiel ein erfindungsgemäßes deichselgelenktes Flurförderzeug im Schnitt und in der Draufsicht. Eine Leistungselektronikeinheit 2, die einen von einem Motorgehäuse 1 umschlossenen Antriebsmotor mit elektrischer Energie versorgt, ist senkrecht oberhalb des Antriebsmotors angeordnet und über ein Befestigungselement an dem Motorgehäuse 1 mit diesem verbunden. Der Antriebsmotor ist mit einer Getriebeeinheit 8 verbunden, welche wiederum an einem auf einer Fahrbahn aufstehenden Antriebsrad 7 befestigt ist. Die von dem Antriebsmotor erzeugte Kraft wird über die Getriebeeinheit 8 auf das Antriebsrad 7 übertragen. Das Antriebsrad 7 wird von einer Bedienperson mittels einer Deichsel 10 gesteuert. Zusätzlich ist noch ein Hubzylinder 9 vorhanden, der das Anheben und Absenken eines nicht dargestellten Lastteils gewährleistet.

Zwischen dem Motorgehäuse 1 und der Leistungselektronikeinheit 2 befindet sich eine Bremseinheit 3, die ebenfalls an einem Befestigungselement des Motorgehäuses 1 angebracht ist.

Ein Gaszylinder 4, welcher der Kompensation der Gewichtskraft der Deichsel 10 dient und außerdem deren Bewegung dämpft, ist mittels eines Befestigungsteils des Motorgehäuses 1 gelenkig an dem Motorgehäuse 1 angeschlossen. Die Deichsel 10 wiederum ist über ein Befestigungselement 5, um dessen horizontale Achse sie sich drehen kann, an dem Motorgehäuse 1 angebracht.

## Patentansprüche

1. Antriebseinheit für ein Flurförderzeug mit einem elektrischen Antriebsmotor, der über eine Getriebeeinheit (8) mit einem lenkbaren Antriebsrad (7) verbunden ist, wobei der Antriebsmotor ein durch Gießen hergestelltes Motorgehäuse (1) aufweist und das Motorgehäuse (1) des Antriebsmotors derart gegossen ist, dass Befestigungsteile und Anbauteile in das Motorgehäuse (1) integriert sind, **dadurch gekennzeichnet, dass** an dem Motorgehäuse (1) mindestens ein Lenkungsanschlag (6) angeordnet ist..

2. Antriebseinheit nach Anspruch 1, **dadurch gekennzeichnet, dass** das Motorgehäuse (1) aus Guss-Eisen oder Stahlguss gebildet ist.

3. Antriebseinheit nach Anspruch 1, **dadurch gekennzeichnet, dass** das Motorgehäuse (1) aus Aluminium gebildet ist

4. Antriebseinheit nach einem der Ansprüche 1 bis 3, **dadurch gekennzeichnet, dass** an dem Motorgehäuse (1) ein Befestigungsteil für eine Leistungselektronikeinheit (2) angeordnet ist.

5. Antriebseinheit nach einem der Ansprüche 1 bis 4, **dadurch gekennzeichnet, dass** an dem Motorgehäuse (1) eine Bremseinheit (3) befestigbar ist.

6. Antriebseinheit nach einem der Ansprüche 1 bis 5, **dadurch gekennzeichnet, dass** an dem Motorgehäuse (1) ein Befestigungselement (5) für eine Deichsel (10) angeordnet ist.

7. Antriebseinheit nach einem der Ansprüche 1 bis 6, **dadurch gekennzeichnet, dass** an dem Motorgehäuse (1) ein Befestigungsteil für einen Gaszylinder (4) einer Deichsel (10) angeordnet ist.

8. Antriebseinheit nach einem der Ansprüche 1 bis 7, **dadurch gekennzeichnet, dass** an dem Motorgehäuse (1) ein Trägerelement für einen Kontaktschalter (11) zur Ermittlung der Stellung der Deichsel (10) angeordnet ist.

## Claims

1. Drive unit for an industrial truck having an electric drive motor which is connected, via a transmission unit (8), to a drive wheel (7) which can be steered, the drive motor having a motor housing (1) which is produced by casting, and the motor housing (1) of the drive motor being cast in such a manner that fixing parts and attachment parts are integrated into the motor housing (1), **characterized in that** at least one steering stop (6) is arranged on the motor housing (1).

2. Drive unit according to Claim 1, **characterized in that** the motor housing (1) is formed from cast iron or cast steel.

3. Drive unit according to Claim 1, **characterized in that** the motor housing (1) is formed from aluminium.

4. Drive unit according to one of Claims 1 to 3, **characterized in that** a fixing part for a power electronics unit (2) is arranged on the motor housing (1).

5. Drive unit according to one of Claims 1 to 4, **characterized in that** a braking unit (3) can be fixed on the motor housing (1).

6. Drive unit according to one of Claims 1 to 5, **characterized in that** a fixing element (5) for a tiller (10) is arranged on the motor housing (1).

7. Drive unit according to one of Claims 1 to 6, **characterized in that** a fixing part for a gas cylinder (4) of a tiller (10) is arranged on the motor housing (1).

8. Drive unit according to one of Claims 1 to 7, **characterized in that** a carrier element for a contact switch (11) for the purpose of determining the position of the tiller (10) is arranged on the motor housing (1).

## Revendications

1. Unité d'entraînement pour un chariot de manutention comprenant un moteur d'entraînement électrique qui est relié à une roue d'entraînement orientable (7) par le biais d'une unité de transmission (8), le moteur d'entraînement présentant un carter de moteur (1) fabriqué par coulage et le carter de moteur (1) du moteur d'entraînement étant coulé de telle sorte que les pièces de fixation et les pièces rapportées sont intégrées dans le carter de moteur (1), **caractérisée en ce qu'**au moins une bute de direction (6) est disposée sur le carter de moteur (1).

2. Unité d'entraînement selon la revendication 1, **caractérisée en ce que** le carter de moteur (1) est constitué de fonte de fer ou d'acier moulé.

3. Unité d'entraînement selon la revendication 1, **caractérisée en ce que** le carter de moteur (1) est constitué d'aluminium.

4. Unité d'entraînement selon l'une des revendications 1 à 3, **caractérisée en ce qu'**une pièce de fixation pour une unité électronique de puissance (2) est disposée sur le carter de moteur (1).

5. Unité d'entraînement selon l'une des revendications 1 à 4, **caractérisée en ce qu'**une unité de frein (3) peut être fixée sur le carter de moteur (1).

6. Unité d'entraînement selon l'une des revendications 1 à 5, **caractérisée en ce qu'**un élément de fixation (5) pour un timon (10) est disposé sur le carter de moteur (1).

7. Unité d'entraînement selon l'une des revendications 1 à 6, **caractérisée en ce qu'**une pièce de fixation pour un vérin à gaz (4) d'un timon (10) est disposée sur le carter de moteur (1).

8. Unité d'entraînement selon l'une des revendications 1 à 7, **caractérisée en ce qu'**un élément porteur pour un commutateur à contact (11) destiné à déterminer la position du timon (10) est disposé sur le carter de moteur (1).
